# EUROPEAN PATENT APPLICATION

(11) **EP 4 287 295 A1**
(43) Date of publication of application: **06.12.2023**
(21) Application number: 22745760.3
(22) Date of filing: 21.01.2022
(51) Int. Cl.: H01M 4/13, H02J 7/04, H01M 10/052, H01M 10/0568, H01M 10/44, H01M 10/48

(54) **SECONDARY BATTERY CHARGING METHOD AND CHARGING SYSTEM**

(30) Priority: 29.01.2021 JP 2021013766
(71) Applicant: Panasonic Intellectual Property Management Co., Ltd., Osaka 571-0057 (JP)
(72) Inventor: MIYAMAE Ryohei, Kadoma-shi, Osaka 571-0057 (JP); KANO Akira, Kadoma-shi, Osaka 571-0057 (JP); FUKUOKA Takahiro, Kadoma-shi, Osaka 571-0057 (JP)
(74) Representative: Novagraaf International SA
(86) International application number: PCT/JP2022/002256
(87) International publication number: WO 2022/163539

(57) **Abstract**

A method of charging a secondary battery, the battery including a positive electrode in which a lithium ion is stored during discharging and released during charging, a negative electrode in which a lithium metal deposits during charging and dissolves during discharging, and a non-aqueous electrolyte having a lithium ion conductivity, wherein the method includes a step of charging the secondary battery according to a first charging profile. In the secondary battery, a surface of the negative electrode is covered with a protection layer. In the first charging profile, charging starts from a first charging step in which charging is performed at a constant current with a first electric current density I₁, and following the first charging step, a second charging step is performed in which charging is performed at a constant current with a second electric current density I₂ that is larger than the first electric current density I₁.

## Description

### [Technical Field]

The present disclosure relates to a method of charging a secondary battery and a charging system.

### [Background Art]

Non-aqueous electrolyte secondary batteries represented by lithium ion secondary batteries have a high energy density and a high output, and expected to be promising as a power supply of mobile devices such as smart-phones, a power source of a vehicle such as an electric vehicle, and a storage device of natural energy such as sunlight.

Patent Literature 1 has proposed, to achieve a high capacity battery, a non-aqueous electrolyte secondary battery in which a lithium metal deposits during charging on the negative electrode current collector, and the lithium metal dissolves during discharging.

Patent Literature 2 has proposed a method of charging a secondary battery having a positive electrode current collecting foil, a positive electrode active material layer, a solid electrolyte layer, and a negative electrode current collecting foil in this order, in which the deposition-dissolution reaction of a metal lithium in the negative electrode is used, wherein the secondary battery is charged with a multistage charging step including: at least a first charging step, in which charging is performed with a first electric current density I1 (mA/cm²) to deposit metal lithium on a surface of the solid electrolyte layer on the negative electrode current collecting foil side and to form a roughness cover layer composed of the metal lithium which is a part of the negative electrode active material layer; and a second charging step, in which after the first charging step, the secondary battery is charged with a second electric current density I2 larger than the first electric current density 11 to thicken the roughness cover layer. In the first charging step, the secondary battery is charged with the first electric current density 11 until X/Y is 0.5 or more, where Y(µm) is the roughness height of the surface of the solid electrolyte layer on the current collecting foil side and X(µm) is the thickness of the roughness cover layer.

### [Citation List]

### [Patent Literature]

PLT1: Japanese Laid-Open Patent Publication No. 2001-243957
PLT2: Japanese Laid-Open Patent Publication No. 2020-9724

### [Summary of Invention]

### [Solution to Problem]

With a type of secondary battery in which a lithium metal deposits in the negative electrode during charging and the lithium metal dissolves into the non-aqueous electrolyte during discharging, generally, it is difficult to control deposition form of the lithium metal, and a technique to suppress dendrite generation is desired. The lithium metal deposited as dendrites during charging tends to isolate partly during discharging from the negative electrode conductive network. Therefore, along with repetitive charge/discharge, cycle characteristics are reduced.

By setting the electric current during charging to small, the dendritic lithium metal deposition can be suppressed, but there are tendencies to increase side reactions between the lithium metal and non-aqueous electrolyte, and also the charging time becomes longer, reducing practicality of the battery.

### [MEANS FOR SOLVING THE PROBLEM]

In view of the above, an aspect of the present disclosure relates to a method of charging a secondary battery, the secondary battery including a positive electrode in which a lithium ion is stored during discharging and the lithium ion is released during charging, a negative electrode in which a lithium metal deposits during charging and the lithium metal dissolves during discharging, and a non-aqueous electrolyte having a lithium ion conductivity, wherein in the secondary battery, a surface of the negative electrode is covered with a protection layer, the method including a step of charging the secondary battery according to a first charging profile, and in the first charging profile, charging starts from a first charging step in which charging is performed at a constant current with a first electric current density I₁, and following the first charging step, a second charging step is performed in which charging is performed at a constant current with a second electric current density I₂ that is larger than the first electric current density I₁.

In view of the above, another aspect of the present disclosure relates to a charging system of a secondary battery, the system including a secondary battery including: a positive electrode in which a lithium ion is stored during discharging and the lithium ion is released during charging, a negative electrode in which a lithium metal deposits during charging and the lithium metal dissolves during discharging, a non-aqueous electrolyte having a lithium ion conductivity, and a protection layer covering a surface of the negative electrode, and a control unit that controls charging of the secondary battery, wherein the charging control unit controls charging of the secondary battery by selecting one from one or more charging profiles including at least a first charging profile; and in the first charging profile, charging starts from a first charging step in which charging is performed at a constant current with a first electric current density I₁, and following the first charging step, a second charging step is performed in which charging is performed at a constant current with a second electric current density I₂ that is larger than the first electric current density I₁.

### [Effects of Invention]

With the present disclosure, dendritic deposition of the lithium metal in the secondary battery is suppressed, and reduction in cycle characteristics can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG.1] FIG.1 is a flow diagram of a method of charging a secondary battery in an embodiment of the present disclosure.
[FIG.2] FIG.2 is a schematic diagram of a charging system of a secondary battery in an embodiment of the present disclosure.
[FIG.3] FIG.3 is a vertical cross sectional view schematically showing a lithium secondary battery used in a charging system of a secondary battery in an embodiment of the present disclosure.
[FIG.4] FIG.4 is an enlarged view of a main part showing an example of the electrode group of FIG.3.
[FIG.5] FIG.5 is an enlarged view of a main part showing another example of the electrode group of FIG.3.

### [Description of Embodiments]

Embodiments of the charging method and charging system of the present disclosure are described below with examples. However, the present disclosure is not limited to the examples below. In the description below, specific numeral values and materials are given as examples, but other numeral values and materials can be used as long as effects of the present disclosure can be achieved. Hereinafter, examples of the charging system of the present disclosure will be described with reference to the drawings.

In the following, the depth of discharge (DOD) means a ratio of the amount of discharged electricity relative to the amount of electricity the battery has in a fully charged state. In contrast, the state of charge (SOC) means a ratio of the amount of remaining electricity in the battery relative to the amount of electricity the battery has in a fully charged state. The rated capacity is the amount of charged electricity (that is, fully charged amount) when a battery in a completely discharged state (SOC = 0%, DOD = 100%) is charged to the fully charged state (SOC = 100%, DOD = 0%). The voltage of the battery in the fully charged state is a charging termination voltage. The voltage of the battery in the completely discharged state is a discharging termination voltage. However, when the rated capacity of a battery is set to C, the battery can be regarded as being in a fully charged state when, for example, it is charged to 0.98 × C (SOC = 98%) or more.

The electric current density (mA/cm²) is a charge density per unit facing area (1 cm²) of the positive electrode and negative electrode, and is determined by dividing the electric current value applied to the battery by a total area of the positive electrode mixture layer (or positive electrode active material layer) facing the negative electrode (hereinafter, referred to as effective total area of positive electrode). The effective total area of the positive electrode is, for example, when the positive electrode has the positive electrode mixture layer on both sides of the positive electrode current collector, a sum of areas of both positive electrode mixture layers (that is, a sum of the projection area of each positive electrode mixture layers to one surface or the other surface of the positive electrode current collector).

A secondary battery charged by a charging method of the present disclosure includes a positive electrode in which a lithium ion is stored during discharging and the lithium ion is released during charging, a negative electrode in which a lithium metal deposits during charging and the lithium metal dissolves during discharging, and a non-aqueous electrolyte having a lithium ion conductivity. That is, the secondary battery is, without limitation, mainly, a lithium (metal) secondary battery.

In lithium secondary batteries, for example, 70% or more of the rated capacity is brought out by deposition and dissolution of a lithium metal. The electron migration in the negative electrode during charging and during discharging is mainly due to deposition and dissolution of the lithium metal in the negative electrode. Specifically, 70 to 100% (e.g., 80 to 100% or 90 to 100%) of the electron migration (from a different point of view, electric current) during charging and discharging in the negative electrode is due to deposition and dissolution of the lithium metal. That is, the negative electrode of this embodiment is different from the negative electrode in which electron migration during charging and discharging in the negative electrode is mainly due to storage and release of lithium ions by a negative electrode active material (graphite, etc.).

In the secondary battery to be charged by the charging method of the present disclosure, the surface of the negative electrode is covered with a protection layer. In this manner, the lithium metal deposited in the negative electrode is covered with the protection layer, and contact between the lithium metal and the non-aqueous electrolyte is suppressed. The protection layer also works to press the lithium metal. The protection layer can suppress growth of the dendritic lithium metal. Thus, side reactions by contact between the lithium metal and non-aqueous electrolyte can be suppressed, and reduction in cycle characteristics involved with the above-described side reactions can be suppressed. Furthermore, by controlling the charging with the charging control unit according to depth of discharge as shown below, growth of dendrites can be suppressed with synergy.

### (Method of charging secondary battery)

A charging method of the present disclosure has a step of charging a secondary battery based on a first charging profile. The first charging profile is selected when, for example, the depth of discharge (DOD: Depth of Discharge) of the secondary battery is a first threshold or more. In the first charging profile, charging starts from a first charging step in which charging is performed at a constant current with a first electric current density I₁, and following the first charging step, a second charging step is performed in which charging is performed at a constant current with a second electric current density I₂ that is larger than the first electric current density I₁. The first threshold may be set to 0%, or to a small value such as 10% or less, but in view of shortening the charging time, the threshold is preferably set to a large value to some extent. When the first threshold is set to 0%, the secondary battery is always charged according to the first charging profile regardless of the DOD.

Here, the charging profile is a recipe in which the conditions such as a charging method, voltage, and electric current when the secondary battery is charged are specified. In other words, the charging profile specifies steps for a one-time schedule for a secondary battery to be charged to a fully charged state. The charging steps are steps by which the secondary battery is charged by different charging conditions. The charging conditions are regulated by a charging electric current and and/or a charging voltage. In each of the charging steps, the charging step may be performed with a constant current or a constant voltage.

It is important to control the lithium metal deposition form in lithium secondary batteries to achieve excellent cycle characteristics. By setting the electric current during charging to small, the dendritic lithium metal deposition can be suppressed, but the charging time becomes longer. To increase practicality of a secondary battery, it is desired to shorten the charging time while suppressing the dendritic lithium metal deposition.

With a smaller charging electric current, the lithium metal hardly deposits dendrites, and the lithium metal tends to deposit in a planar form. However, when the DOD is shallow, the negative electrode has a sufficient base layer of lithium metal, and therefore, lithium metal hardly deposits as dendrites as compared with the case where the DOD is deep. That is, when the DOD is deep, to suppress deposition of dendritic lithium metal, discharging has to be performed with a small charging electric current. Meanwhile, when the DOD is shallow, charging does not have to be performed with a small charging electric current compared with the case where the DOD is deep, and rather, a large charging electric current can shorten the charging time, which is practical.

Thus, in the charging method in an embodiment of the present disclosure, when the DOD is deep and the DOD is a first threshold or more, based on the first charging profile, charging is started with a small constant current with a first electric current density I1, and thereafter charging is performed at a constant current with a second electric current density I₂ that is larger than the first electric current density I₁. In this manner, deposition of dendritic lithium metal can be suppressed, and reduction in cycle characteristics can be suppressed. Charging at a constant current with a first electric current density I₁ (first charging step) is performed, for example, until the depth of discharge is less than a predetermined second threshold, and at the point when the depth of discharge is less than the second threshold, charging is switched to charging at a constant current with a second electric current density I₂ (second charging step).

Meanwhile, when the DOD is shallow and the DOD is less than the first threshold, to suppress the deposition of dendritic lithium metal, charging does not have to be performed with a small first electric current density I₁, and rather, charging can be performed with an electric current density larger than the first electric current density I₁, to shorten the charging time with priority. Thus, when the DOD is less than the first threshold, charging can be performed based on the second charging profile that is different from the first charging profile. In the second charging profile, charging is started from a third charging step in which charging is performed at a constant current with a third electric current density I₃ that is larger than the first electric current density I₁. In this manner, deposition of dendritic lithium metal can be suppressed, and also charging time can be shortened.

The first electric current density I₁ is, for example, 3.0 mA/cm² or less, or may be 1 mA/cm² or less. In view of balance between charging time and cycle characteristics, the first electric current density I₁ is preferably 0.1 mA/cm² or more, or may be 0.5 mA/cm² or more.

The second electric current density I₂ is larger than the first electric current density I₁, and for example, 4.0 mA/cm² or more. I₁/I₂ may be, for example, 0.1 or more and 0.5 or less, or 0.2 or more and 0.4 or less. I₁/I₂ may be, for example, 0.2 or more and 0.9 or less, or 0.3 or more and 0.7 or less.

The third electric current density I₃ in the second charging profile may be equal to the second electric current density I₂. In that case, in the first charging step where the first charging profile is selected, after charging until the DOD becomes less than the first threshold, the second charging step may be performed. That is, the second threshold may be the same as the first threshold. In this case, the second charging profile corresponds to the case where, in the first charging profile, the first charging step is skipped when the DOD is less than the first threshold. In this case, when the DOD is the first threshold or more, the secondary battery is charged with an electric current density I₁ until the DOD becomes less than the first threshold, and when the DOD is less than the first threshold, the secondary battery is charged with the second electric current density I₂. That is, charging is controlled, substantially, based on one charging profile having a plurality of charging steps in which start conditions and termination conditions for charging are set by the DOD. In this manner, when realizing the charging method, structure for a control circuit with simple and easy control can be adopted.

The threshold (first threshold) for the DOD that determines selection of the first charging profile and the second charging profile may be, for example, 50% or more and 90% or less, or 70% or more and 90% or less. With a shallow depth of discharge of less than DOD 50% (that is, SOC of 50% or more), a sufficient base layer for lithium metal deposition is present during charging, and therefore lithium metal is not likely to isolate. In this case, the second profile is selected, in which a speedy completion of charging as much as possible is prioritized. Meanwhile, with a deep depth of discharge of DOD 90% or more (that is, SOC of less than 10%), the presence of the base layer to which lithium metal deposits during charging is insufficient, and dendritic growth of lithium metal is likely to occur. In this case, the first profile is selected to prioritize careful progression of charging.

The first charging profile and the second charging profile may be each configured with a plurality of charging steps. The first charging profile may further have one or more charging steps performed after the second charging step. Similarly, the second charging profile may further have one or more charging steps performed after the third charging step.

The number of charging steps n included in the first charging profile may be more than the number of charging steps m included in the second charging profiles. When the DOD is deep, the first profile including more charging steps is selected with priority to shorten the charging time by charging with a larger electric current as it approaches nearer to the end period of charging. Meanwhile, when the DOD is shallow, in the second charging profile, the charging electric current does not have to be increased by so small interval. Thus, more simple control (or more simple control circuit structure) can be adopted.

The number of charging steps m included in the second charging profile is, for example, 2 to 5, and may be 2 to 4, or 2 to 3, but m = 2 is efficient. n-m may be 1 or more, but n-m = 1 or 2 is efficient. Of the charging steps included in the first charging profile and/or second charging profile, the last charging step may be a charging step with a constant voltage.

In any of the first charging profile and second charging profile, the value of the electric current during charging is small at first, and increases gradually. In the first charging profile including n charging steps, the electric current during charging increases by a smaller interval than that of the second charging profile including m charging steps. However, charging electric current may decrease, after going through the phase in which the charging electric current gradually increases from the start of charging. Generally, in the step of charging a secondary battery, the battery is charged to a fully charged state (SOC 100%) according to the first charging profile or the second charging profile.

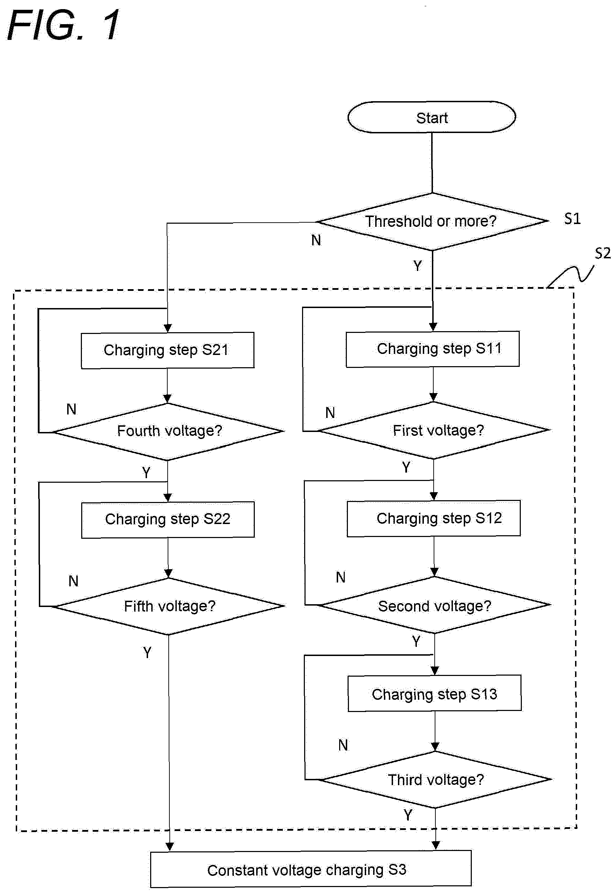

FIG.1 is a flow diagram showing an example of charging control with a charging control unit in a secondary battery system of the present disclosure. The illustrated example of the charging control method has a step (S1) of selecting, before a start of charging, any of a first charging profile and a second charging profile. Such a selection is performed based on the DOD detected by a DOD detection unit before a starting point of the step of charging a secondary battery (hereinafter, also referred to as time T). In this manner, during use period of the secondary battery in which charge/discharge is repeated, the electric current for charging can be selectively made small, within a necessary range, while time required for the charging can be shortened entirely.

To be specific, the second charging profile includes at least two charging steps, and the first charging profile includes charging steps of more than that of the second charging profile. That is, when the second charging profile includes m (≥2) charging steps, the first charging profile includes n (≥3) charging steps.

At the starting point of the step of charging a secondary battery (time T), the second charging profile is selected when the secondary battery has a depth of discharge of less than a predetermined first threshold, or the first charging profile is selected when the depth of discharge is the first threshold or more (S2). That is, at the time T, when the DOD is shallow (SOC of the battery is high), the number of charging steps is less, and when the DOD is deep (SOC of the battery is low), the number of charging steps is more. In the first charging profile, the charging electric current may be increased by a smaller amount than that of the second charging profile. That is, in the first charging profile, charging can start with a charging electric current smaller than the second charging profile. In the charging step performed in a latter part of the first charging profile, charging can be performed with a charging electric current larger than the second charging profile.

The first charging profile includes, for example, a charging step S11 (first charging step) with an electric current density I₁₁ (= I₁), and a charging step S12 (second charging step) that follows, with an electric current density I₁₂ (= I₂) larger than the electric current density I₁₁ (I₁₁ < I₁₂ (I₁ < I₂)).

The second charging profile includes, for example, a charging step S21 (third charging step) with an electric current density I₂₁(= I₃), and a charging step S12 that follows, with an electric current density I₂₂ larger than the electric current density I₂₁ (I₂₁ < I₂₂). The electric current density I₂₁ is larger than the electric current density I₁₁ (I₂₁> I₁₁(I₃> I₁)).

The first charging profile has more charging steps than that of the second charging profile, and has a charging step S13 with an electric current density I₁₃ following the charging step S12. The electric current density I₁₃ is preferably larger than the electric current density I₁₂ (I₁₂ < I₁₃).

The amount of charged electricity (Q₁) in the charging step S11 may be 5% or more and 15% or less of a total amount of charged electricity in the step of charging a secondary battery. Here, total amount of charged electricity in the step of charging a secondary battery means an amount of charged electricity from the start of charging until the secondary battery is in a fully charged state, and changes depending on the DOD or SOC of the secondary battery at the start of charging. In the following, a total amount of charged electricity charged according to the first profile is also referred to as a total amount of charged electricity P1. When Q₁ is 5% or more of the total amount of charged electricity P1, the effect of suppressing the dendritic lithium metal growth increases. When Q₁ is 15% or less of the total amount of charged electricity, effects of suppressing the dendritic lithium metal growth can be obtained sufficiently while shortening the charging time.

The charging step S11 is set, for example, as a first charging step in the first profile. The charging step S21 is set, for example, as a first charging step in the second profile. The charging step S11, charging step S12, and charging step S13 in the first profile may all be a constant current charging step. The charging step S21 and charging step S22 in the second profile both can be a constant current charging step.

As described above, I₁₁ (= I₁) < I₂₁ (= I₃). I₁₁/I₂₁ (=I₁/I₃) is not particularly limited, and for example, may be 0.2 to 1, or 0.5 to 1.

When I₂₁ is closer to I₂₂ (I₂₁/I₂₂ is near 1), the charging time of charging the secondary battery with the second profile can be shortened. Meanwhile, with a large I₁₂ relative to I₁₁ (small I₁₁/I₁₂), lithium metal dendrites hardly grow. Thus, I₂₁/I₂₂> I₁₁/I₁₂ is preferably satisfied.

I₂₂ may be 6.0 mA/cm² or more. However, with an excessively large I₂₂, the possibility of lithium metal isolation increases gradually during charging, and therefore I₂₂ is preferably 8.0 mA/cm² or less. I₂₁/I₂₂ may be, for example, 0.1 or more and 0.8 or less, or 0.4 or more and 0.7 or less.

I₁₂ is preferably 1.0 mA/cm² or more, or may be 2.0 mA/cm² or more, or 4.0 mA/cm² or more. However, with an excessively large I₁₂, the possibility of lithium metal isolation increases gradually during charging, and therefore I₁₂ is preferably 6.0 mA/cm² or less. I₁₃ is preferably 6.0 mA/cm² or more, or 8.0 mA/cm² or more. However, with an excessively large I₁₃, the possibility of lithium metal isolation increases gradually during charging, and therefore I₁₃ is preferably 10.0 mA/cm² or less.

I₁₁/₁₂ (=I₁/I₂) may be, for example, 0.1 or more and 0.5 or less, or 0.2 or more and 0.4 or less. I₁₂/I₁₃ may be, for example, 0.2 or more and 0.9 or less, or 0.3 or more and 0.7 or less.

In the charging step S11 (initial charging period) with a small first electric current density I₁₁ (=I₁), lithium metal deposits in the negative electrode current collector in blocks (particles), and an excellent base layer of lithium metal is easily formed. Thus, even when the electric current density I₁₂ of the subsequent charging step S12 is set to be larger than I₁₁, the dendritic lithium metal is unlikely to grow. Furthermore, the base layer of lithium metal further grows in the charging step S12, and therefore, even if the electric current density I₁₃ of the following charging step S13 is set to be larger than that of I₁₂ (I₁₂ < I₁₃), dendritic lithium metal growth is suppressed. In this manner, the charging time can be significantly shortened.

The amount of charged electricity (Q₂) in the charging step S21 may be 5% or more and 15% or less of a total amount of charged electricity in the step of charging a secondary battery. In the following, a total amount of charged electricity charged according to the second profile is also referred to as a total amount of charged electricity P2. When Q₂ is 5% or more of the total amount of charged electricity P2, the effect of suppressing the dendritic lithium metal growth increases. When Q₂ is 15% or less of the total amount of charged electricity P2, effects of suppressing the dendritic lithium metal growth can be obtained sufficiently while shortening the charging time.

The timing at which each of the charging steps is terminated may be controlled by, for example, the charging time, amount of charged electricity, voltage, and the like; ratio of the amount of the electricity charged relative to the total amount of charged electricity P1 and P2 in each of the charging steps; or SOC or DOD or charging rate. The SOC or DOD may be assumed based on the voltage. For example, the SOC is assumed based on the voltage, and a charging termination voltage may be set in each of the charging steps.

For example, in charging according to the first profile, when the battery voltage reaches the first voltage in the charging step S11 with the electric current density I₁₁, the charging step S11 with the electric current density I₁₁ is terminated and the charging step S12 with the electric current density I₁₂ is started. Then, when the battery voltage reaches the second voltage by charging with the electric current density I₁₂, the charging step S12 with the electric current density I₁₂ is terminated and the charging step S13 with the electric current density I₁₃ is started. Then, when the battery voltage reaches the third voltage in the charging step with the electric current density I₁₃, charging with the electric current density I₁₃ is terminated. The first voltage is, for example, a voltage at which 15% or less of the total amount of charged electricity P1 is charged; the second voltage is, for example, a voltage at which 50% or less of the total amount of charged electricity P1 is charged in total; and the third voltage is, for example, a voltage at which 90% or more of the total amount of charged electricity P1 is charged in total.

Furthermore, for example, in charging according to the second profile, when the battery voltage reaches the fourth voltage in the charging step S21 with the electric current density I₂₁, charging with the electric current density I₂₁ is terminated and the charging step S22 with the electric current density I₂₂ is started. Then, when the battery voltage reaches the fifth voltage by charging in the charging step S22 with the electric current density I₂₂, charging with the electric current density I₂₂ is terminated. The fourth voltage is, for example, a voltage at which 15% or less of the total amount of charged electricity P2 is charged, and the fifth voltage is, for example, a voltage at which 90% or more of the total amount of charged electricity P2 is charged in total.

When the charging termination voltage is set based on the SOC or DOD in each of the charging steps, the second voltage may be equal to the fourth voltage, and the third voltage may be equal to the fifth voltage. That is, the charging termination conditions in the charging step S12 may be the same as the charging termination conditions in the charging step S21, and the charging termination conditions in the charging step S13 may be the same as the charging termination conditions in the charging step S22. In this case, I₁₂ = I₂₁ (I₂ = I₃), and also it may be I₁₃ = I₂₂. That is, charging conditions in the charging step S12 may be the same as the charging conditions in the charging step S21, and the charging conditions in the charging step S13 may be the same as the charging conditions in the charging step S22.

In addition, the first voltage may be a voltage corresponding to the threshold (first threshold) for determining the DOD in the step S1. When these are satisfied, charging is substantially controlled based on one charging profile having a plurality of (three in the example of FIG 1.) charging steps specifying charging start conditions and charging termination conditions based on the DOD. In this manner, structure for a control circuit with simple and easy control can be adopted.

That is, charging of the secondary battery can be controlled based on the charging profile including at least a first charging step when the DOD is less than a threshold, in which charging is performed with an electric current density I₁ until the DOD reaches the threshold, and a second charging step when the DOD is the threshold or more, in which charging is performed with an electric current density I₂.

To perform the charging more reliably, subsequent to the charging step at the constant current, a constant voltage charging step S3 may be performed. Such a charging step is performed, for example, until the electric current reaches a predetermined value. For example, after performing the final constant current charging step until a predetermined charging termination voltage, a charging step with a constant voltage may be performed with that voltage. Afterwards, discharging is performed until a predetermined discharging termination voltage as a limit.

### (Protection layer)

The protection layer covers the surface of the negative electrode to suppress contact between lithium metal deposited in the negative electrode and the non-aqueous electrolyte and to suppress growth of lithium metal dendrites. As a result, side reactions based on the contact between lithium metal and the non-aqueous electrolyte are suppressed, and reduction in cycle characteristics involved with the above-described side reactions can be suppressed. The protection layer may be, for example, a resin layer including resin. The resin layer may be a mixed layer of resin and inorganic particles. In this manner, an excellent lithium ion conductivity can be easily obtained in the protection layer, and lithium ion migration can be performed smoothly between the negative electrode and the non-aqueous electrolyte through the protection layer during charging and discharging.

Examples of the resin include a fluorine-containing polymer (fluorine resin), polyolefin resin, acrylic resin, silicone resin, epoxy resin, polyimide, polyamide-imide, polyvinyl alcohol, polyacrylic acid, polymethacrylic acid, poly ethylene oxide, and polystyrene. A kind of resin may be used singly, or two or more kinds thereof may be used in combination. In view of thermal stability and chemical stability in particular, resin preferably includes fluorine resin. Preferably, the fluorine resin includes at least one selected from the group consisting of polyvinylidene fluoride (PVdF), polytetrafluoroethylene (PTFE), copolymer of vinylidene fluoride (VdF) and hexafluoropropylene (HFP), and a copolymer of VdF and tetrafluoroethylene (TFE). Preferably, among these, PVdF is more preferable.

The inorganic particles are particles including inorganic materials (e.g., metal oxide, metal hydroxide, metal composite oxide, metal nitride, metal carbide, metal fluoride). Specific examples of the inorganic material include copper oxide, bismuth oxide, tungsten oxide, indium oxide, and silver oxide. A kind of inorganic particles (inorganic material) may be used singly, or two or more kinds thereof may be used in combination. In particular, the inorganic particles preferably include at least one selected from the group consisting of copper oxide particles and bismuth oxide particles. In terms of a high strength of the protection layer, the inorganic particles may have a density of 6 g/cm³ or more.

When the protection layer is a layer including resin and inorganic particles, the density ratio of the inorganic particles relative to resin may be 3.5 or more. Presumably, when the above-described density ratio is 3.5 or more, when forming the protection layer, the inorganic particles can deposit thinly and densely to form a film with a homogeneous thickness. Thus, uneven distribution due to coagulation of inorganic particles in the surface direction of the protection layer is suppressed, variation of strength in the protection layer along the surface direction is suppressed, and reliability of the strength of the protection layer is improved.

PVdF as resin is advantageous in that the density ratio of inorganic particles relative to the resin material can be easily adjusted to 3.5 or more; the strength of the protection layer can be easily increased; it has suitable swelling properties relative to the solvent of the non-aqueous electrolyte; and it is easily processable. Having suitable swelling properties, an excellent lithium ion conductivity can be easily achieved in the protection layer.

Preferably, the protection layer includes one or more lithium salts. By the protection layer including a lithium salt, a lithium ion conductivity can be increased. The lithium salt included in the protection layer may be lithium bis(fluoro sulfonyl) imide (LFSI). Of the examples of the lithium salt, LFSI is preferable because plasticity of the protection layer can be increased, and film stability can be improved. The lithium salt content relative to the protection layer as a whole is, for example, 0.1 to 20 mass%.

The lithium salt included in the protection layer is included when the protection layer is formed. The lithium salt included in the non-aqueous electrolyte may enter the protection layer. Also, a portion of the lithium salt included in the protection layer may dissolve in the non-aqueous electrolyte. However, even if the lithium salt included in the non-aqueous electrolyte enters the protection layer, the lithium salt derived from the non-aqueous electrolyte stays at the surface layer of the protection layer, and at a deep portion of the protection layer, lithium salt included at the time of its formation is present. Thus, by disassembling the secondary battery after charge/discharge, and taking out the protection layer to analyze its composition, the lithium salt included in the protection layer can be checked.

The resin may have a molecular weight (weight-average molecular weight) of, for example, 10,000 or more and 2,000,000 or less. When the weight-average molecular weight is within the above-described range, a protection layer having excellent flexibility can be easily obtained. When winding the negative electrode in the battery production process, excellent followability to the negative electrode can be achieved, and coverage of the negative electrode surface with the protection layer can be easily maintained.

In view of suppressing contact between the lithium metal and non-aqueous electrolyte and suppressing penetration of the protection layer with dendrites, the protection layer may have a thickness of 0.1 µm or more and 5 µm or less, or 0.5 µm or more and 2 µm or less. The thickness of the protection layer may be determined by obtaining cross sectional images of the protection layer on the surface of the negative electrode with a scanning electron microscope (SEM), and measuring the thickness at any 10 points in the protection layer using the cross sectional image, and averaging these values.

The protection layer is required to have functions of, for example, a high lithium ion conductivity. However, generally, a high lithium ion conductivity inversely correlates with film stability of the protection layer. A protection layer having a high lithium ion conductivity tends to have a low film strength, and along with repetitive charge/discharge cycles, deposition of lithium metal becomes inhomogeneous, the protection layer is easily damaged, which may cause dendritic lithium metal to penetrate the protection layer, and tensions involved with expansion and contraction of the wound body during charging and discharging may tear the protection layer. As a result, the film stability of the protection layer decreases along with increase in the number of cycles, and therefore by only providing the negative electrode with a protection layer, in some cases, effects of suppressing growth of dendrites cannot be brought out sufficiently, and reduction in cycle characteristics cannot be suppressed sufficiently.

However, with the charging system of a secondary battery of the present disclosure, by combining with control of the charging electric current density in accordance with depth of discharge, the protection layer continues to function while inhomogeneous deposition of lithium metal is suppressed, and therefore effects of suppressing growth of dendrites can be brought out sufficiently, and significantly high cycle characteristics can be achieved.

The protection layer can be formed, for example, by applying an ink for forming a protection layer on a surface of the negative electrode current collector, and drying. The application may be performed, for example, by using a bar coater, applicator, or gravure coater. An ink for forming the protection layer can be prepared by, for example, adding a resin material, liquid component, and as necessary a lithium salt and inorganic particles, and then mixing them. For the liquid component, a component in which inorganic particles are dispersible, and resin material is dissolvable can be used, such as, for example, N-methyl-2-pyrrolidone (NMP), dimethyl ether (DME), tetrahydrofuran (THF), etc.

Preferably, a space for lithium metal to deposit is provided between the negative electrode and the positive electrode. The above-described space can be formed by providing a spacer between the negative electrode and the positive electrode. In view of improvement in productivity, a material that is the same as the protection layer may be used for the spacer. The thickness of the protection layer can be partly thickened when forming the protection layer, and the portion having a large thickness can be used as the spacer. That is, the spacer may be disposed so as to be integrated with the protection layer. For example, an ink for forming a protection layer is applied using a coater (e.g., gravure coater) on the surface of the negative electrode current collector to form a protection layer, and further using a dispenser, the same ink for forming a protection layer described above is applied in lines on the protection layer to form lined projections (spacer). In view of improvement in productivity, the protection layer and projections can be dried simultaneously after forming the projections.

### (Charging system)

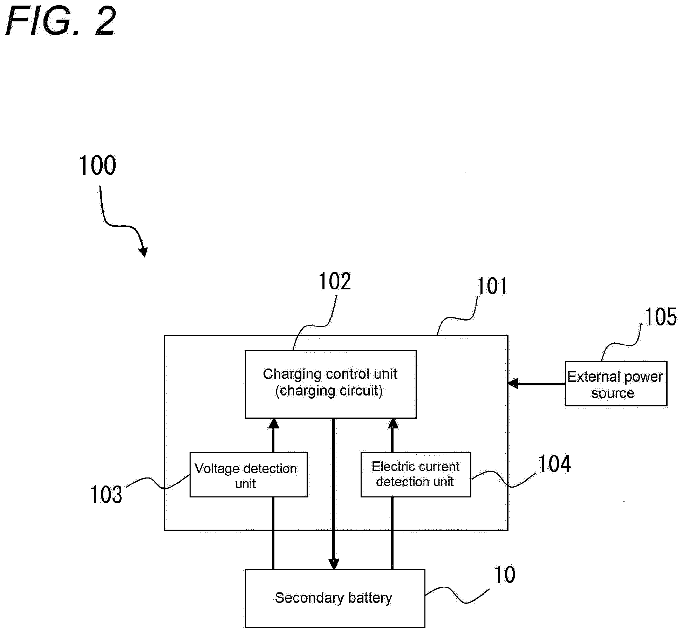

FIG.2 is a configuration diagram of an example of an embodiment of a charging system of a secondary battery of the present disclosure. The charging system includes a secondary battery 10 and a charging device 101. To the charging device 101, an external power source 105 that supplies electric power to the charging device 101 is connected. The charging device 101 includes a charging control unit 102 including a charging circuit. The charging control unit 102 selects one charging profile from one or more charging profiles including at least the first charging profile, and controls charging of the secondary battery according to the selected charging profile. Selection of the charging profile is performed based on, for example, a depth of discharge (DOD) of a secondary battery before charging starts.

The charging control unit selects, for example, when the DOD is a predetermined threshold or more before charging starts, a first charging profile, and controls charging of a secondary battery according to the first charging profile. In the first charging profile, charging starts from a first charging step, in which charging is performed at a constant current with a first electric current density I₁, and following the first charging step, a second charging step is performed at a constant current with a second electric current density I₂ that is larger than the first electric current density I₁. Meanwhile, when the DOD is less than the predetermined threshold before charging starts, the charging control unit selects, for example, a second charging profile, and controls charging of a secondary battery according to the second charging profile. In the second charging profile, charging starts from a third charging step, in which charging is performed at a constant current with a third electric current density I₃ that is larger than the first electric current density I₁.

The charging device 101 includes, as a DOD detection unit that detects the DOD of the secondary battery, a voltage detection unit 103 that detects the voltage of the secondary battery 10. The voltage detection unit 103 includes an operation unit that detects the voltage of the secondary battery 10 before a start of charging the secondary battery, and calculates the DOD based on the detected voltage. Based on the DOD determined by the operation unit, the charging control unit 102 selects any of the first charging profile and the second charging profile. Then, charging of the secondary battery is controlled based on the selected charging profile. The charging control unit 102 may start, based on the DOD determined by the operation unit, a second charging step, after terminating the performance of the first charging step in the first charging profile.

The charging device 101 includes an electric current detection unit 104 that detects an electric current output from the secondary battery. The charging control unit 102 controls the charging electric current so that the electric current value detected by the electric current detection unit 104 does not greatly deviate from the predetermined value.

In FIG.2, switching and termination timing of the charging step are controlled based on the voltage (or DOD (or SOC)) detected by the voltage detection unit 103, but the control method is not limited. For example, at least a part of the control can be performed based on charging time, amount of charged electricity, etc.

Next, description is given below of further details of the secondary battery.

### (Negative Electrode)

The negative electrode includes a negative electrode current collector. In lithium secondary batteries, lithium metal deposits on the negative electrode surface by charging. More specifically, lithium ions included in the non-aqueous electrolyte receive electrons on the negative electrode by charging to be lithium metal, and deposits on the negative electrode surface. The lithium metal deposited on the negative electrode surface dissolves as lithium ions in the non-aqueous electrolyte by discharging. The lithium ions included in the non-aqueous electrolyte may be derived from the lithium salt added to the non-aqueous electrolyte, or may be supplied from the positive electrode active material by charging, or both.

The negative electrode may include a negative electrode current collector, and a sheet form lithium metal closely attached to the negative electrode current collector, and further may include a lithium ion storage layer (layer that exhibits capacity by storage and release of lithium ions by negative electrode active material (graphite, etc.)) supported on the negative electrode current collector. In this case, the negative electrode open circuit potential in a fully charged state may be 70 mV or less relative to lithium metal (dissolution deposition potential of lithium). When the negative electrode open circuit potential in the fully charged state is 70 mV or less relative to lithium metal, lithium metal is present at the lithium ion storage layer surface in the fully charged state. That is, the negative electrode exhibits a capacity based on deposition and dissolution of lithium metal. When lithium metal does not deposit on the surface of the lithium ion storage layer, the protection layer covers the surface of the lithium ion storage layer, and when lithium metal deposits on the surface of the lithium storage layer, covers the surface of the lithium metal.

The fully charged state means a state in which a battery is charged until a charging state of, for example, 0.98 × C or more (SOC = 98% or more), setting a rated capacity of the battery as C. The open circuit potential of the negative electrode in a fully charged state may be measured by decomposing the battery in the fully charged state in an argon atmosphere to take out the negative electrode, and assembling a cell using lithium metal as a counter electrode. The non-aqueous electrolyte of the cell may be the same composition as the non-aqueous electrolyte of the decomposed battery.

The lithium ion storage layer is formed with a negative electrode mixture including a negative electrode active material into a layer. The negative electrode mixture may include, other than the negative electrode active material, a binder, thickener, conductive agent, etc.

Examples of the negative electrode active material include a carbonaceous material, a Si-containing material, and a Sn-containing material. The negative electrode may include one kind of negative electrode active material, or two or more kinds can be used in combination. Examples of the carbonaceous material include graphite, graphitizable carbon (soft carbon), and non-graphitizable carbon (hard carbon).

The conductive agent is, for example, a carbon material. Examples of the carbon material include carbon black, acetylene black, Ketjen Black, carbon nanotube, and graphite.

Examples of the binder include fluorine resin, polyacrylonitrile, polyimide resin, acrylic resin, polyolefin resin, and rubber polymer. Examples of the fluorine resin include polytetrafluoroethylene and polyvinylidene fluoride.

The negative electrode current collector may be an electrically conductive sheet. Examples of the electrically conductive sheet include foil and film. The thickness of the negative electrode current collector is not particularly limited, and is, for example, 5 µm or more and 300 µm or less.

For the material of the negative electrode current collector (electrically conductive sheet), a conductive material other than lithium metal and lithium alloy may be used. The conductive material may be a metal material such as a metal and an alloy. Preferably, the conductive material is a material that does not react with lithium. Preferably, more specifically, a material that does not form an alloy or intermetallic compound with lithium is used. For such a conductive material, for example, copper (Cu), nickel (Ni), iron (Fe), and an alloy including these metal elements, or a graphite with its basal plane exposed with priority is used. Examples of the alloy include copper alloy and stainless steel (SUS). Preferably, copper and/or a copper alloy having a high electrical conductivity among these is used. The negative electrode current collector may be copper foil or a copper alloy foil.

### (Positive Electrode)

The positive electrode includes, for example, a positive electrode current collector, and a positive electrode mixture layer supported on the positive electrode current collector. The positive electrode mixture layer includes, for example, a positive electrode active material, conductive agent, and binder. The positive electrode mixture layer may be formed on one side of the positive electrode current collector, or both sides. The positive electrode is produced by, for example, applying a positive electrode mixture slurry containing a positive electrode active material, conductive agent, and binder onto both sides of the positive electrode current collector, drying the applied coating, and then rolling.

The positive electrode active material is a material that stores and releases lithium ions. Examples of the positive electrode active material include a composite oxide including lithium and metal Me other than lithium (e.g., lithium-containing transition metal oxide including at least transition metal as metal Me), fluorinated transition metal, polyanion, fluorinated polyanion, and sulfide of transition metals. In particular, in view of less production costs and high average discharge voltage, a lithium-containing transition metal oxide is preferable. In particular, those having a layered rock salt type crystal structure is preferable.

Lithium included in the lithium-containing transition metal oxide is released during charging as lithium ions from the positive electrode, and deposits on the negative electrode or negative electrode current collector as lithium metal. During discharging, lithium metal dissolves from the negative electrode and releases lithium ions, and is stored in the composite oxide of the positive electrode. That is, the lithium ions involved with charge/discharge are generally derived from the solute in the non-aqueous electrolyte and positive electrode active material. In this case, the molar ratio mLi/mMe of a total amount of Li included in the positive electrode and negative electrode mLi, relative to the amount of the metal Me included in the lithium-containing transition metal oxide mMe is, for example, 1.2 or less.

Examples of the transition metal element included in the lithium-containing transition metal oxide include Sc, Ti, V, Cr, Mn, Fe, Co, Ni, Cu, Y, Zr, and W. The lithium-containing transition metal oxide may include a single type of transition metal element, or two or more types may be included. The transition metal element may be Co, Ni and/or Mn. The lithium-containing transition metal oxide may include, as necessary, one or more typical elements. Examples of the typical element include Mg, AI, Ca, Zn, Ga, Ge, Sn, Sb, Pb, and Bi. The typical element may be Al and the like.

Preferably, for the transition metal element in the lithium-containing transition metal oxide, in particular, a composite oxide having a layer structure and a rock salt type crystal structure including Co, Ni and/or Mn as the transition elements is used in terms of obtaining a high capacity. The composite oxide may include Al as an optional component. Preferably, for the transition metal, a lithium-containing transition metal oxide including at least Ni is used, in terms of a particularly high capacity. In this case, in the lithium secondary battery, the molar ratio mLi/mM of the total amount of lithium included in the positive electrode and negative electrode mLi, relative to the amount of metal M other than lithium included in the positive electrode mM, may be set to, for example, 1.1 or less.

The lithium-containing transition metal oxide is represented by, for example, a general formula (1): LiₐNi_{b}M_{1-b}O₂. In the general formula (1), for example, m0.9 ≤ a ≤ 1.2 and 0.65 ≤ b ≤ 1 are satisfied. M may be, for example, at least one element selected from the group consisting of Co, Mn, Al, Ti, Fe, Nb, B, Mg, Ca, Sr, Zr, and W.

For the binder and conductive agent, for example, those exemplified for the negative electrode may be used. The shape and thickness of the positive electrode current collector can be selected from the shapes and ranges according to the positive electrode current collector.

Examples of the positive electrode current collector (electrically conductive sheet) material include a metal material including Al, Ti, Fe, etc. The metal material may be Al, Al alloy, Ti, Ti alloy, Fe alloy, etc. The Fe alloy may be stainless steel (SUS).

### (Separator)

For the separator, a porous sheet having ion permeability and insulating properties is used. Examples of the porous sheet include microporous thin film, woven fabric, nonwoven fabric, and the like. The separator material is not particularly limited, and a polymer material may be used. Examples of the polymer material include olefin resin, polyamide resin, cellulose, etc. Examples of the olefin resin include polyethylene, polypropylene, and a copolymer of ethylene and propylene. The separator may include, as necessary, an additive. Examples of the additive include an inorganic filler.

The thickness of the separator is, without particular limitation, for example, 5 µm or more and 20 µm or less, or preferably 10 µm or more and 20 µm or less.

### (Non-aqueous electrolyte)

The non-aqueous electrolyte having a lithium ion conductivity includes, for example, a non-aqueous solvent, and lithium ions and anions dissolved in the non-aqueous solvent. The non-aqueous electrolyte may be liquid or gel.

The liquid non-aqueous electrolyte is prepared by dissolving a lithium salt in a non-aqueous solvent. By dissolving the lithium salt in a non-aqueous solvent, lithium ions and anions are generated.

The gel non-aqueous electrolyte includes a lithium salt and a matrix polymer, or includes a lithium salt, a non-aqueous solvent, and a matrix polymer. As the matrix polymer, for example, a polymer material which absorbs and gels the non-aqueous solvent is used. Examples of the polymer material include fluororesin, acrylic resin, and polyether resin.

As the anion, for example, a known one used in the non-aqueous electrolyte of lithium secondary batteries can be used. Specific examples thereof include anions of BF₄⁻, ClO₄⁻, PF₆⁻, CF₃SO₃⁻, CF₃CO₂⁻, and imides, and anions of oxalate complexes. Examples of the anions of imides include N(SO₂CF₃)₂⁻, N(CₘF₂ₘ₊₁SO₂)ₓ (CₙF₂ₙ₊₁SO₂)y⁻ (m and n are each independently an integer of 0 or 1 or more, x and y are each independently 0, 1, or 2, and x+ y = 2 is satisfied). The anion of the oxalate complex may contain boron and/or phosphorus. Examples of the anion of the oxalate complex include bis oxalateborate anion, difluorooxalateborate anion (BF₂(C₂O₄)⁻), PF₄(C₂O₄)⁻, and PF₂(C₂O₄)₂⁻. The non-aqueous electrolyte may contain one kind of anion, and may contain two or more kinds thereof.

In view of suppressing the deposition of lithium metal dendrites, the non-aqueous electrolyte preferably includes at least an anion of the oxalate complex, and in particular, includes an oxalate complex anion having fluorine (particularly difluorooxalateborate anion). Due to the interaction between the anion of the oxalate complex having fluorine and lithium, the lithium metal tends to deposit in a fine particulate form uniformly. Therefore, local deposition of lithium metal can be easily suppressed. Anions of the oxalate complex having fluorine and other anions may be combined. Other anions may be anions of PF₆⁻ and/or imides.

Examples of the non-aqueous solvent include ester, ether, nitrile, amide, or halogen substituted compounds thereof. The non-aqueous electrolyte may include one kind of non-aqueous solvent, and may contain two or more kinds thereof. Examples of the halogen substituted compounds include fluoride.

The non-aqueous electrolyte has a lithium salt concentration of, for example, 0.5 mol/L or more and 3.5 mol/L or less. The non-aqueous electrolyte may have an anion concentration of 0.5 mol/L or more and 3.5 mol/L or less. The non-aqueous electrolyte may have an oxalate complex anion concentration of 0.05 mol/L or more and 1 mol/L or less.

The structure of the lithium secondary battery can be, for example, a structure in which an electrode group formed by winding a positive electrode and a negative electrode with a separator interposed therebetween and a non-aqueous electrolyte are accommodated in an outer case. However, the structure is not limited thereto, and other forms of electrode group may be used. For example, a laminate electrode group, in which the positive electrode and negative electrode are laminated with a separator interposed therebetween, may be used. The shape of the lithium secondary battery is not limited as well, and for example, a cylindrical, prism-shaped, coin-shaped, button-shaped, and laminate type may be used.

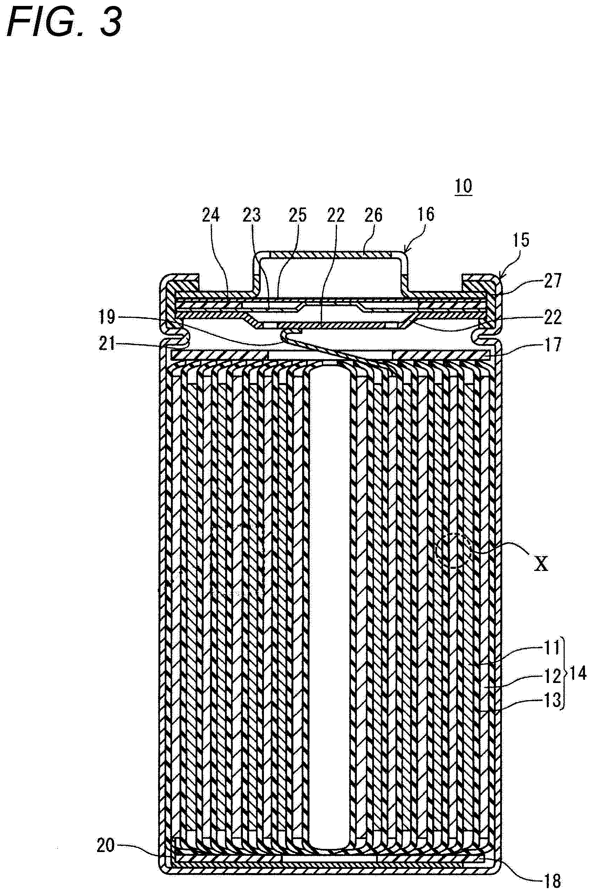

In the following, a configuration of the lithium secondary battery is described with reference to the drawings using a cylindrical battery including a wound electrode group as an example. FIG.3 is a vertical cross sectional view of a lithium secondary battery 10 as an example of this embodiment.

The lithium secondary battery 10 is a cylindrical battery including a cylindrical battery case, a wound type electrode group 14 accommodated in the battery case, and a non-aqueous electrolyte, which is not shown. The battery case is configured with a case body 15 of a bottomed cylindrical metal-made vessel, and a sealing body 16 that seals an opening of the case body 15. The case body 15 has a ring step portion 21 formed by partly pressing a side wall near the opening from outside. The sealing body 16 is supported from a face at the opening side of the step portion 21. Between the case body 15 and the sealing body 16, a gasket 27 is disposed, and in this manner, sealing properties of the battery case are ensured. In the case body 15, at both end portions of the winding axis direction of the electrode group 14, insulating plates 17, 18 are disposed.

The sealing body 16 includes a filter 22, a lower valve 23, an insulating member 24, an upper valve 25, and a cap 26. The cap 26 is disposed outside the case body 15, and the filter 22 is disposed inside the case body 15. The lower valve 23 and the upper valve 25 are connected to each other at their center portions, and an insulating member 24 is interposed between their peripheral end portions. The filter 22 and the lower valve 23 are connected to each other at their peripheral end portions. The upper valve 25 and the cap 26 are connected to each other at their peripheral end portions. A vent hole is formed at the lower valve 23. When the internal pressure of the battery case increases by, for example, abnormal heat generation, the upper valve 25 bulges to the cap 26 side to be spaced apart from the lower valve 23. In this manner, the electrical connection between the lower valve 23 and the upper valve 25 is disconnected. Further increase in the internal pressure breaks the upper valve 25, and gas is discharged from the opening formed at the cap 26.

The electrode group 14 is configured with a positive electrode 11, a negative electrode (negative electrode current collector) 12, and a separator 13. The positive electrode 11, negative electrode 12, and separator 13 interposed therebetween are all strips, and are wound in a spiral shape so that their width directions are in parallel with the winding axis. At both ends of the electrode group 14 in the axis direction, the insulating plates 17 and 18 are disposed, respectively.

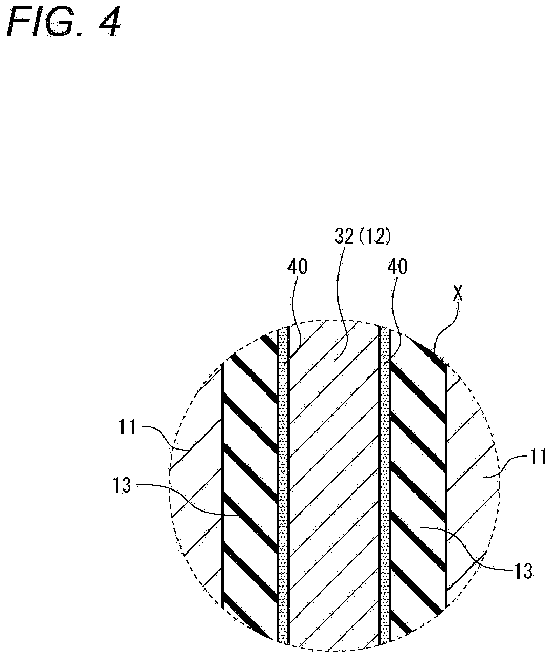

FIG.4 is an enlarged view of a main part showing an example of the electrode group of FIG.3. FIG.4 is an enlarged view schematically showing the region X enclosed in the broken line in FIG.3, which is a state where lithium metal is not deposited on the surface of the negative electrode current collector.

As shown in FIG.4, the positive electrode 11 includes a positive electrode current collector and a positive electrode mixture layer. The positive electrode 11 is electrically connected with the cap 26 also serving as a positive electrode terminal through a positive electrode lead 19. An end of the positive electrode lead 19 is connected, for example, near a center in the longitudinal direction of the positive electrode 11 (exposed portion of the positive electrode current collector). The other end of the positive electrode lead 19 extended from the positive electrode 11 is welded to an inner face of the filter 22 via through holes formed in the insulating plate 17.

The negative electrode 12 includes a negative electrode current collector 32, and the surface of the negative electrode current collector 32 is covered with a protection layer 40. The protection layer 40 is a layer including the above-described block polymer. The negative electrode 12 is electrically connected with a case body 15 also serving as a negative electrode terminal through the negative electrode lead 20. An end of the negative electrode lead 20 is connected, for example, to an end portion (exposed portion of the negative electrode current collector 32) of a longitudinal direction of the negative electrode 12, and the other end thereof is welded to an inner bottom face of the case body 15. During charging, lithium metal deposits on a surface of the negative electrode current collector 32, and the surface of the lithium metal is covered with the protection layer 40.

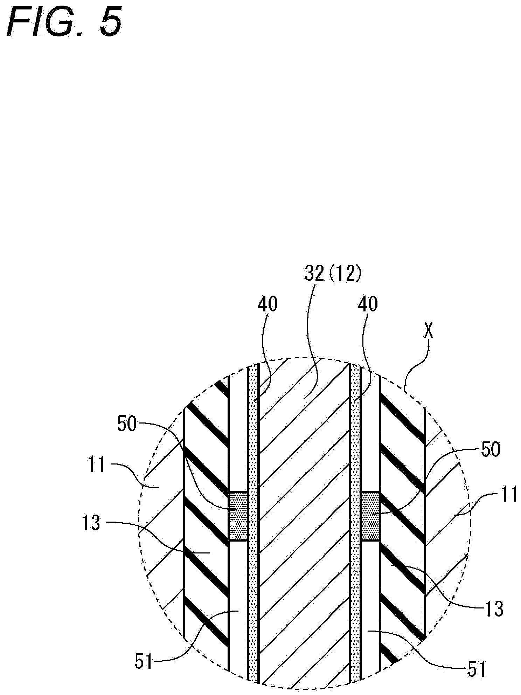

FIG.5 is an enlarged view of a main part showing another example of the electrode group of FIG.3. FIG.5 is an enlarged view schematically showing the region X enclosed in the broken line in FIG.3, which is a state where lithium metal is not deposited on the surface of the negative electrode current collector. For those components that are the same as those in FIG.4, the same reference numerals are given and description thereof is omitted.

As shown in FIG.5, a spacer 50 is provided between the negative electrode 12 having a protection layer 40 on its surface and the separator 13. The spacer 50 is formed with lined projections provided so as to be in line with the longitudinal direction of the separator 13. The spacer 50 (lined projections) has a height based on the protection layer 40 of, for example, 10 µm or more and 100 µm or less. The spacer 50 (lined projections) has a width of 200 µm or more and 2000 µm or less. The spacer 50 is configured with the materials that are the same as those of the protection layer 40, and may be integrated with the protection layer 40. A plurality of lined projections may be provided parallelly at a predetermined interval. As shown in FIG.5, when lithium metal is not deposited on the surface of the negative electrode current collector 32, a space 51 is formed between the negative electrode 12 and the separator 13. Lithium metal deposited on the surface of the negative electrode current collector 32 during charging is accommodated in the space 51 between the negative electrode 12 and the separator 13 while receiving a pressure from the separator 13.

Lithium metal is accommodated in the space 51 between the negative electrode 12 and the separator 13, and therefore apparent volume change of the electrode group along with lithium metal deposition in charge/discharge cycle is reduced. Thus, the stress given to the negative electrode current collector 32 is suppressed. Also, the pressure is applied to lithium metal accommodated between the negative electrode 12 and the separator 13 from the separator 13, and therefore deposition state of lithium metal is controlled, isolation of lithium metal hardly occurs, and reduction in charge/discharge efficiency is suppressed.

In the example shown in the figure, the spacer 50 has a rectangular cross section. However, the embodiment of the present disclosure is not limited thereto, and it may be, for example, trapezoid, rectangular having a curved line on at least one corner, elliptic, and a part of elliptic. In the example shown in the figure, the spacer 50 is provided between the negative electrode 12 and the separator 13. However, embodiments of the present disclosure is not limited thereto, and the spacer may be provided between the positive electrode and the separator, or between the separator and each of the positive electrode and the negative electrode.

In the example shown in the figure, a cylindrical lithium secondary battery including a wound electrode group is described, but the shape of the lithium secondary battery is not limited thereto, and in accordance with its usage, it may be selected suitably from various shapes such as cylindrical, coin, prism, sheet, and flat shapes. The form of the electrode group is not particularly limited as well, and it may be a laminated form. For the configuration other than the electrode group and non-aqueous electrolyte of the lithium secondary battery, a known one can be used without limitation.

### [Examples]

In the following, the present invention will be described in detail based on Examples, but the present invention is not limited to Examples below.

### <Example 1>

### (Production of positive electrode)

Lithium nickel composite oxide (LiNi_{0.9}Co_{0.05}Al_{0.05}O₂), acetylene black, and polyvinylidene fluoride (PVdF) were mixed at a mass ratio of 95:2.5:2.5, and N-methyl-2-pyrrolidone (NMP) was added: the mixture was stirred to prepare a positive electrode slurry. Then, the positive electrode slurry was applied to a surface of Al foil as a positive electrode current collector, the film was dried and then rolled, to produce a positive electrode in which a positive electrode mixture layer (density 3.6 g/cm³) was formed on both sides of the Al foil.

### (Production of negative electrode)

A strip electrolytic copper foil (thickness 15 µm) was prepared as a negative electrode current collector, and a 25 µm Li foil was attached on the negative electrode current collector. PVdF, LFSI, and NMP as a dispersion medium were mixed at a mass ratio of PVdF: LFSI = 90:10, thereby preparing an ink for forming a protection layer. The ink for forming a protection layer was applied to both sides of the negative electrode, and dried, thereby forming a protection layer (thickness 2 µm).

### (Non-aqueous electrolyte preparation)

A lithium salt was dissolved in a solvent mixture, thereby preparing a non-aqueous electrolyte. Fluoro ethylene carbonate (FEC), ethyl methyl carbonate (EMC), and dimethyl carbonate (DMC) were mixed at a volume ratio of FEC: EMC: DMC = 20:5:75, and used for the solvent mixture. LiPF₆, LiN(FSO₂)₂ (hereinafter, referred to as LiFSI), and LiBF₂(C₂O₄) (hereinafter, LiFOB) were used for the lithium salt. The non-aqueous electrolyte had a LiPF₆ concentration of 0.5 mol/L, and a LiFSI concentration of 0.5 mol/L. The non-aqueous electrolyte had a LiFOB content of 1 mass%.

### (Battery assembly)

An Al-made positive electrode lead was attached to the above-described positive electrode, and a Ni-made negative electrode lead was attached to the above-described negative electrode. In an inert gas atmosphere, the positive electrode and the negative electrode were wound with a polyethylene thin film (separator) interposed therebetween into a spiral shape, thereby producing a wound-type electrode group. The electrode group was accommodated in a bag-type outer package formed of a laminate sheet including an Al layer, the above-described non-aqueous electrolyte was injected, and then the outer package was sealed, thereby producing a non-aqueous electrolyte secondary battery. Upon accommodating the electrode group in the outer package, a portion of the positive electrode lead and a portion of the negative electrode lead were allowed to be exposed to the outside of the outer package.

The voltage at SOC 100% was 4.1 V, and the voltage at DOD 100% was 3.0 V.

### (Preliminary charge/discharge)

Using the produced battery A1 (rated capacity 100 mAh), under a 25°C environment, the following preliminary charge/discharge were performed. The electric current value (1/X) C represents an electric current value when an amount of electricity corresponding to the rated capacity C is charged or discharged at a constant current by X hours. For example, 0.1C is an electric current value when the amount of electricity corresponding to the rated capacity C is charged or discharged by 10 hours at a constant current.

### (Preliminary charge)

Constant current charging was performed until the voltage reached 4.1 V (SOC 100%) with an electric current I₀ of 0.05C (electric current density of 0.5 mA/cm²).

### (Preliminary discharge)

After a 10-minute rest, constant current discharging was performed at 0.6C (electric current density of 6.0 mA/cm²) until the voltage reached 3.0 V (SOC 0%).

### (Charge/discharge cycle test)

Using batteries after preliminary charge/discharge, under a 25°C environment, charge/discharge cycle test was conducted under the charge/discharge conditions shown below. In the charge cycle, according to the above-described first charging profile, charging was performed based on the charging profile including two constant current charging steps.
(1) DOD at the start of charge:100% (voltage 3.0 V)
(2) Initial charging step (first charging step)
   first electric current density I₁: 3 mA/cm²
   amount of charged electricity Q₁: 11% of total amount of charged electricity P1 (until DOD becomes 89%)
(3) Following charging step (second charging step)
   second electric current density I₂: 4 mA/cm²
   amount of charged electricity: remaining part of total amount of charged electricity P1
(4) Constant voltage charging step
   constant voltage charging at 4.1 V until the electric current reached 0.02C (electric current density of 0.2 mA/cm²)
(5) Discharge step
   After a 10-minute rest, constant current discharging at 0.6C (electric current density of 6.0 mA/cm²) until the voltage reached 3.0 V

The above-described charge/discharge cycle was repeated 250 cycles, and a discharge capacity C₂₅₀ after 250 cycles was determined. A ratio of C₂₅₀ relative to a discharge capacity C₀ after preliminary discharge, defined by C₂₅₀/C₀ × 100(%) was evaluated as a capacity retention rate.

### <Comparative Example 1 >

In Examples, a negative electrode in which the protection layer was not formed was made, and a battery B1 was produced.

The B1 after preliminary charge/discharge was subjected to a charge/discharge cycle test under a 25°C environment, under the charge/discharge conditions shown below, and a ratio of a discharge capacity C₂₅₀ after 250 cycles relative to a discharge capacity C₀ after preliminary discharge, defined by C₂₅₀/C₀ × 100 (%) was evaluated as a capacity retention rate. As shown below, in the charge cycle, charging was performed based on a charging profile including one constant current charging step.
(1) DOD at the start of charge: 100% (voltage 3.0 V)
(2) Initial charging step
   Charging a total amount of charged electricity (amount to achieve SOC 100%) with the second electric current density I₂: 4 mA/cm²
(3) Constant voltage charging
   Constant voltage charging at 4.1 V until the electric current reached 0.02C (electric current density of 0.2 mA/cm²)
(4) Discharge
   After a 10-minute rest, constant current discharging at 0.6C (electric current density of 6.0 mA/cm²) until the voltage reached 3.0 V

### <Comparative Example 2>

The battery A1 of Example 1 was used.

The battery A1 after preliminary charge/discharge was subjected to a charge/discharge cycle test including charging with the same charging profile as Comparative Example 1 under a 25°C environment, and a capacity retention rate was determined in the same manner as in Comparative Example 1.

### <Comparative Example 3>

The battery B1 of Comparative Example 1 was used.

The battery B1 after preliminary charge/discharge was subjected to a charge/discharge cycle test including charging with the same charging profile as Example 1 under a 25°C environment, and a capacity retention rate was determined in the same manner as in Example 1.

Table 1 shows evaluation results of the capacity retention rate of the batteries. Table 1 also shows the configuration of the protection layer of the battery used in Examples and Comparative Examples, and charging conditions (number of the constant current charging step).

**[Table 1]**

| | Protection layer | No. of steps in constant current charging | Capacity retention rate (%) |
|---|---|---|---|
| Example 1 | PVdF + LFSI | 2 | 94.1 |
| Comp. Ex. 1 | None | 1 | 87.7 |
| Comp. Ex. 2 | PVdF + LFSI | 1 | 87.9 |
| Comp. Ex. 3 | None | 2 | 90.4 |

Based on Comparative Examples 1 and 2, when the number of the constant current charging step was 1, and the charging was performed until SOC 100% with a constant current charging step with the second electric current density I₂ that is larger than the first electric current density I₁, the capacity retention rate was low. Also, no clear difference was seen on the capacity retention rate based on the presence or absence of the protection layer.

On the other hand, in Example 1 and Comparative Example 3, by dividing the constant current charging step into two, and charging to SOC 100% by the constant current charging step with the first electric current density I₁, followed by the constant current charging step (I₁ < I₂) with the second electric current density I₂, the capacity retention rate improved.

When the protection layer was not provided, based on the difference between Comparative Example 1 and Comparative Example 3, the improvement of the capacity retention rate by dividing the charging step into two was about 2.7%. On the other hand, when the protection layer was provided, based on the difference between Example 1 and Comparative Example 2, the improvement of the capacity retention rate by dividing the charging step into two was about 6.2%, which was significantly increased.

### [Industrial Applicability]

The charging method and charging system of the present invention is suitably used for charging of a type of lithium secondary battery in which lithium metal deposits on the negative electrode current collector during charging, and the lithium metal dissolves during discharging.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: lithium secondary battery
- 11: positive electrode
- 12: negative electrode
- 13: separator
- 14: electrode group
- 15: case body
- 16: sealing body
- 17, 18: insulating plates
- 19: positive electrode lead
- 20: negative electrode lead
- 21: step portion
- 22: filter
- 23: lower valve
- 24: insulating member
- 25: upper valve
- 26: cap
- 27: gasket
- 32: negative electrode current collector
- 40: protection layer
- 50: spacer
- 51: space
- 101: charging device
- 102: charging control unit
- 103: voltage detection unit
- 104: electric current detection unit
- 105: external power source

## Claims

1. A method of charging a secondary battery, the secondary battery comprising: a positive electrode in which a lithium ion is stored during discharging and the lithium ion is released during charging, a negative electrode in which a lithium metal deposits during charging and the lithium metal dissolves during discharging, and a non-aqueous electrolyte having a lithium ion conductivity, wherein
in the secondary battery, a surface of the negative electrode is covered with a protection layer,
the method including a step of charging the secondary battery according to a first charging profile, and
in the first charging profile, charging starts from a first charging step in which charging is performed at a constant current with a first electric current density I₁, and following the first charging step, a second charging step is performed in which charging is performed at a constant current with a second electric current density I₂ that is larger than the first electric current density I₁.

2. The method of charging a secondary battery of claim 1, wherein the first charging step is performed until a depth of discharge is less than a predetermined threshold value.

3. The method of charging a secondary battery of claim 1 or 2, wherein the first electric current density I₁ is 3.0 mA/cm² or less.

4. The method of charging a secondary battery of any one of claims 1 to 3, wherein the second electric current density I₂ is 4.0 mA/cm² or more.

5. The method of charging a secondary battery of any one of claims 1 to 4, wherein an amount of charged electricity in the first charging step is 5% or more and 15% or less of a total amount of charged electricity charged in the step of charging the secondary battery.

6. The method of charging a secondary battery of any one of claims 1 to 5, wherein the protection layer includes at least one lithium salt.

7. The method of charging a secondary battery of any one of claims 1 to 6, wherein the protection layer includes resin, and
the resin has a molecular weight of 10000 or more and 2000000 or less.

8. The method of charging a secondary battery of claim 7, wherein the resin includes fluorine resin.

9. The method of charging a secondary battery of any one of claims 1 to 8, wherein the protection layer has a thickness of 0.1 µm or more and 5 µm or less.

10. The method of charging a secondary battery of any one of claims 1 to 9, wherein the non-aqueous electrolyte includes a lithium ion and an anion, and
the anion includes an anion of an oxalate complex.

11. The method of charging a secondary battery of claim 10, wherein the anion of the oxalate complex includes difluorooxalateborate anion.

12. The method of charging a secondary battery of any one of claims 1 to 11, wherein a space for the lithium metal to deposit is provided between the negative electrode and the positive electrode.

13. A charging system of a secondary battery, the system comprising a secondary battery and a control unit that controls charging of the secondary battery, the secondary battery including:
a positive electrode in which a lithium ion is stored during discharging and the lithium ion is released during charging,
a negative electrode in which a lithium metal deposits during charging and the lithium metal dissolves during discharging,
a non-aqueous electrolyte having a lithium ion conductivity, and
a protection layer covering a surface of the negative electrode, wherein
the charging control unit controls charging of the secondary battery by selecting one from one or more charging profiles including at least a first charging profile, and
in the first charging profile, charging starts from a first charging step in which charging is performed at a constant current with a first electric current density I₁, and following the first charging step, a second charging step is performed in which charging is performed at a constant current with a second electric current density I₂ that is larger than the first electric current density I₁.

14. The charging system of a secondary battery of claim 13, further including a DOD detection unit that detects a depth of discharge of the secondary battery, wherein
in the first charging profile, the first charging step is performed until the depth of discharge is less than a predetermined threshold value.
